# EUROPÄISCHE PATENTSCHRIFT

(11) **EP 0 641 979 B1**
(45) Veröffentlichungstag und Bekanntmachung des Hinweises auf die Patenterteilung: **11.03.1998**
(21) Anmeldenummer: 94113738.2
(22) Anmeldetag: 02.09.1994
(51) Int. Cl.: F25B 49/00, F28C 1/14

(54) **Luftgekühlte Kühlanlage mit Durchflussmengenregelung**
Air-cooled cooling plant with flow regulation
Réfrigérant refroidi par air avec régulation de débit

(30) Priorität: 04.09.1993 DE 4329998
(43) Veröffentlichungstag der Anmeldung: 08.03.1995
(73) Patentinhaber: BDAG Balcke-Dürr Aktiengesellschaft, D-40882 Ratingen (DE)
(72) Erfinder: Tesche, Walter Dipl.-Ing., D-40833 Mettmann (DE); Zimmermann, Peter Dipl.-Ing., D-45133 Essen (DE)
(74) Vertreter: Stenger, Watzke & Ring Patentanwälte

(56) Entgegenhaltungen:
- DE-A- 2 452 123
- GB-A- 1 361 901
- US-A- 4 964 977

## Beschreibung

Die Erfindung betrifft eine luftgekühlte Kühlanlage mit einem mindestens aus einem Wärmetauscher bestehenden Trockenteil und einem Naßteil, dem das den Trockenteil verlassende Wärmeträgermedium kraftschlüssig zugeführt wird, wobei parallel zum Wärmetauscher eine Überströmleitung angeordnet ist, die bei höheren Durchflußmengen einen Teil des Wärmeträgermediums unter Umgehung des Wärmetauschers direkt dem Naßteil zuführt.

Derartige luftgekühlte Kühlanlagen sind aus "VGB Kraftwerkstechnik", Heft 8/1987, Seiten 763 bis 768, bekannt. Falls abweichend von der üblichen Ausgestaltung, bei der die Größe des Trockenteils der maximalen Durchflußmenge des Wärmeträgermediums entsprechend gewählt ist, beispielsweise zur Reduzierung der Anlagekosten der Trockenteil bei hydraulischer Nennlast nur mit einem Teilstrom beschickt wird, ergibt sich bei derartigen Kühlanlagen der Nachteil, daß bei höheren Durchflußmengen im Trockenteil die dynamischen Druckverluste ansteigen. Damit steigen bei höheren Durchflußmengen nicht nur die Energieverluste, sondern es ergibt sich eine infolge des Druckanstieges begrenzte maximale Durchflußmenge, die nur durch Überdimensionierung des Wärmetauschers und/oder der Pumpe und des Rohrleitungssystems angehoben werden kann.

Der Erfindung liegt die **Aufgabe** zugrunde, eine luftgekühlte Kühlanlage der eingangs beschriebenen Art zu schaffen, die trotz der Auslegung des Trockenteils auf nur einen Teil der maximalen Durchflußmenge des Wärmeträgermediums einen von der Durchflußmenge unabhängigen Druckverlust erzeugt.

Die **Lösung** dieser Aufgabenstellung durch die Erfindung ist dadurch gekennzeichnet, daß in der Überströmleitung ein Klappenventil angeordnet ist, dessen Klappe bei Überschreiten eines dem dynamischen Druckverlust des zugehörigen Wärmetauschers bei Erreichen seines Auslegungsdurchsatzes entsprechenden Vordruckes selbsttätig unter Aufrechterhaltung des Vordruckes öffnet, wobei der Auslegungsdurchsatz des Wärmetauschers einer Teilmenge des maximalen Wärmeträgerdurchsatzes der Kühlanlage entspricht.

Diese Anordnung eines auf den dynamischen Druckverlust des Trockenteils bei Erreichen seines Auslegungsdurchsatzes abgestimmten Klappenventils in der Überströmleitung hat den Vorteil, daß - sobald die Durchflußmenge des Wärmeträgermediums die Auslegungsmenge des Trockenteils übersteigt - das Klappenventil in der Überströmleitung gerade so weit öffnet, daß unter Aufrechterhaltung des den Öffnungsvorgang auslösenden Vordruckes die den Auslegungsteilstrom des Wärmetauschers übersteigende Menge über die Überströmleitung direkt dem Naßteil der Kühlanlage zugeleitet wird. Hierdurch wird ein Anstieg der hydraulischen Druckverluste im Trockenteil vermieden; außerdem entfällt die Notwendigkeit, den Trockenteil der Kühlanlage und/oder die Pumpe und das zugehörige Rohrleitungssystem ausschließlich im Hinblick auf höhere Durchflußmengen überdimensional auszuführen.

Gemäß einem weiteren Merkmal der Erfindung wird das Klappenventil etwa in derselben geodätischen Höhe wie der höchste Punkt des Wärmetauschers in der Überströmleitung angeordnet.

Da bei kraftschlüssigem Betrieb der Kühlanlage die geodätische Förderhöhe des Wärmetauschers zurückgewonnen wird, beim Befüllen der Anlage jedoch zusätzlich zum dynamischen Druckverlust des Wärmetauschers aufgebracht werden muß, vermeidet diese Weiterbildung der Erfindung die Notwendigkeit, eine Zwangssteuerung des Klappenventils für den Anfahrvorgang vorzusehen, wenn der dynamische Druckverlust des Wärmetauschers in derselben Größenordnung oder geringer als die geodätische Förderhöhe ist.

Bei einer mehrere parallel geschaltete Wärmetauscher umfassenden Kühlanlage wird gemäß einem weiteren Merkmal der Erfindung vorgeschlagen, am höchsten Punkt der durch Zusammenführung der Überströmleitung und der Austrittsleitung jedes Wärmetauschers gebildeten Rücklaufleitung ein Belüftungsventil anzuordnen.

Mit Hilfe dieses Belüftungsventils kann durch kurzzeitiges Belüften der Kraftschluß der bei Teilbetrieb in Betrieb befindlichen Wärmetauscher aufgehoben werden, so daß weitere Wärmetauscher befüllt und in Betrieb genommen werden können, wobei durch die Klappenventile der Durchfluß durch die in Betrieb befindlichen Wärmetauscher weiterhin ungestört geregelt wird.

Mit der Erfindung wird schließlich vorgeschlagen, die Klappe des Klappenventils als gewichtsbelastete Klappe auszubilden, wodurch sich eine besonders einfache und störungsfrei arbeitende Konstruktion ergibt, die nicht nur auf besonders einfache Weise über die Hebellänge und das Gewicht eine Einstellung des gewünschten Vordruckes zum Öffnen des Klappenventils ermöglicht, sondern eine Regelcharakteristik ergibt, bei der sich ein nahezu konstanter Durchfluß durch den Wärmetauscher unabhängig von der Fördermenge im Gesamtsystem, d.h. von der durch die Uberströmleitung am Trockenteil vorbeigeführten Menge des Wärmeträgermediums ergibt.

Auf der Zeichnung ist ein Ausführungsbeispiel der erfindungsgemäßen Vorrichtung zur Durchflußmengenregelung dargestellt, und zwar zeigen:
- Fig. 1: eine schematische Darstellung einer luftgekühlten Kühlanlage,

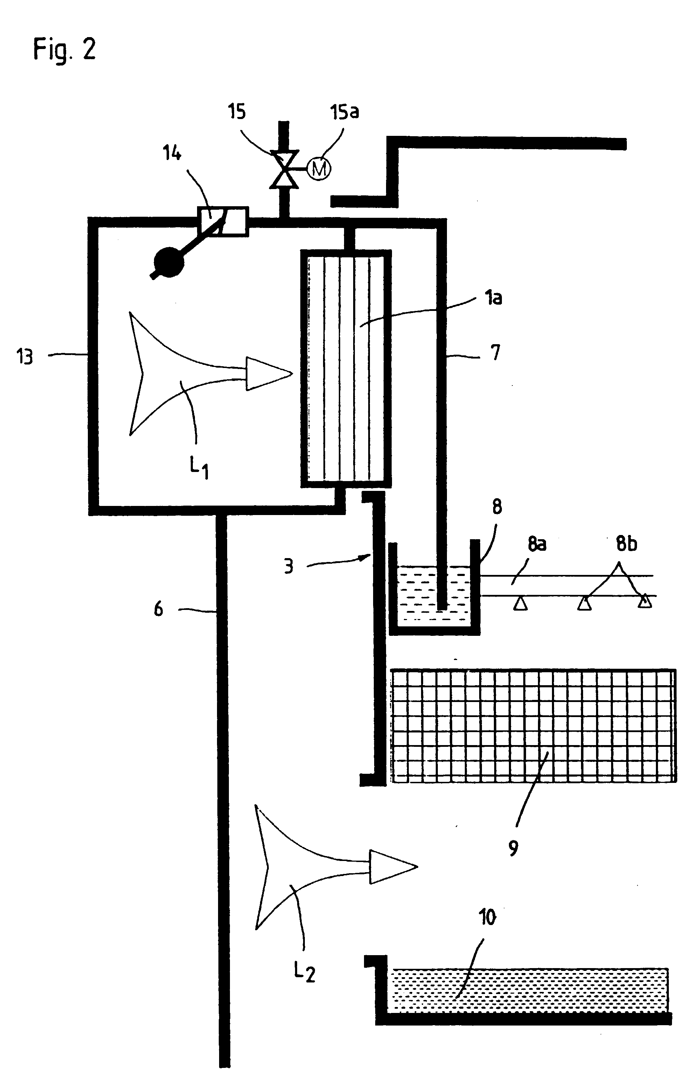

- Fig. 2: eine schematische Darstellung eines Wärmetauschers der in Fig. 1 dargestellten Kühlanlage und
- Fig. 3: ein Ausführungsbeispiel eines zur Durchflußmengenregelung verwendeten Klappenventils.

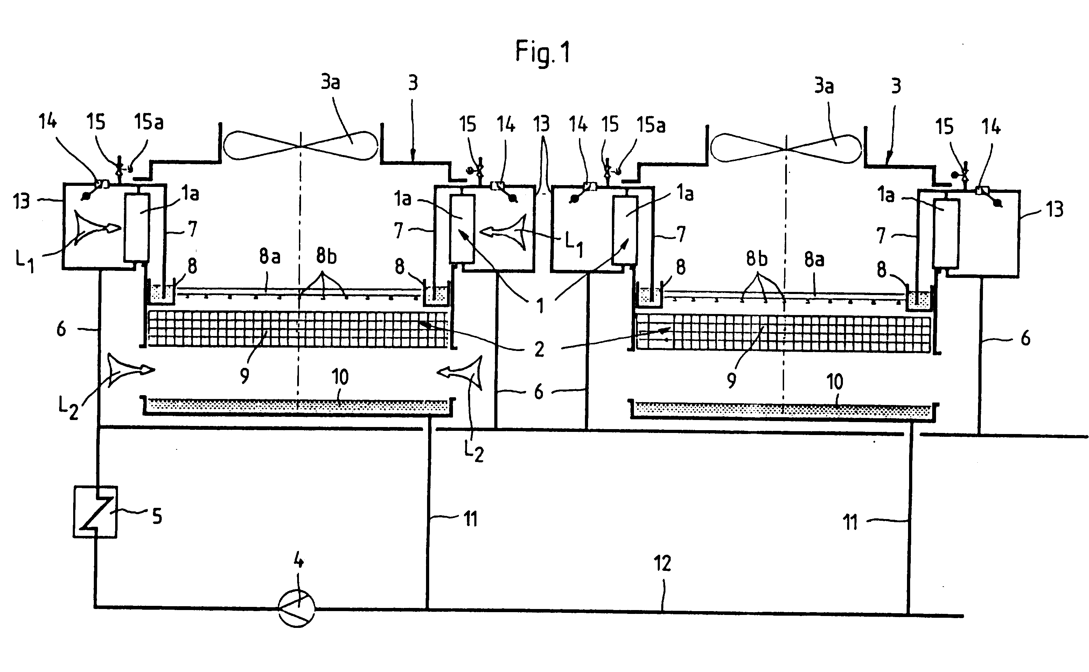

Die in ihrer Gesamtheit in Fig. 1 schematisch dargestellte Kühlanlage umfaßt einen beim Ausführungsbeispiel durch zwei Wärmetauscher la gebildeten Trockenteil 1 sowie einen Naßteil 2, der hinsichtlich des Wärmeträgermediums dem Trockenteil 1 nachgeschaltet ist. Beim Ausführungsbeispiel nach Fig. 1 ist jeder Wärmetauscher la im oberen Teil eines als Kühlturm 3 ausgebildeten Gebäudes angeordnet. Es handelt sich um einen zwangsbelüfteten Kühlturm 3, der mit einem saugenden Ventilator 3a ausgestattet ist.

Die beiden Kühltürme 3 sind parallel zueinander geschaltet. Sie werden gemeinsam durch eine Pumpe 4 mit Wärmeträgermedium beschickt, das beim Durchströmen eines Wärmeübertragers 5 Wärme aufnimmt, die in den Kühltürmen 3 in die Umgebungsluft abgeführt wird.

Das im Wärmeübertrager 5 aufgeheizte Wärmeträgermedium wird jedem Kühlturm 3 über eine Steigleitung 6 zugeführt, die im unteren Teil jedes Wärmetauschers la mündet. Bei diesem Wärmetauscher la kann es sich um einen Röhren- oder Plattenwärmetauscher handeln, aus dem das Wärmeträgermedium durch eine an der obersten Stelle angeschlossene Austrittsleitung 7 austritt. Diese Austrittsleitung 7 mündet unterhalb des Flüssigkeitsstandes in einem zur Atmosphäre offenen Verteiler 8. An diesen Verteiler 8 ist mindestens eine Verteilleitung 8a mit Sprühdüsen 8b angeschlossen, durch welche das Wärmeträgermedium einem Rieseleinbau 9 aufgegeben wird, aus dem das herabfallende Wärmeträgermedium aufgrund der Schwerkraft in eine Sammeltasse 10 gelangt, die über eine Abflußleitung 11 an eine zur Pumpe 4 führende Sammelleitung 12 angeschlossen ist.

Das heiß aus dem Wärmeübertrager 5 austretende Wärmeträgermedium gelangt auf diese Weise über die Steigleitung 6 zuerst in einen Wärmetauscher 1a. Beim Durchströmen dieses Wärmetauschers 1a wird das heiße Wärmeträgermedium durch Kühlluft L₁ gekühlt, die durch einen Pfeil in Fig. 1 symbolisiert ist und durch den Ventilator 3a angesaugt wird. Das abgekühlte Wärmeträgermedium gelangt anschließend über die Austrittsleitung 7 in den Verteiler 8 und wird über die an der Verteilleitung 8a angeordneten Sprühdüsen 8b auf den Rieseleinbau 9 versprüht. Hier gelangt das Wärmeträgermedium in unmittelbaren Kontakt mit einem weiteren Kühlluftstrom L₂, der parallel zur Kühlluft L₁ durch den Ventilator 3a angesaugt wird und sich nach Durchströmen des Rieseleinbaus 9 mit der im Trockenteil 1 erwärmten Kühlluft L₁ mischt, bevor die erwärmte Kühlluft L₁ und L₂ aus dem Kühlturm 3 abgesaugt wird. Da die einen höheren Feuchtigkeitsanteil enthaltende Kühlluft L₂ des Naßteils 2 mit der trockenen Kühlluft L₁ des Trockenteils 1 gemischt wird, arbeitet der Kühlturm 3 normalerweise ohne sichtbaren Schwaden.

Da der Wärmeübergang zwischen der Kühlluft L₂ und dem Naßteil 2 des Kühlturms 3 erheblich besser ist als der Wärmeübergang zwischen dem den Trockenteil 1 bildenden Wärmetauscher 1a und der Kühlluft L₁, würden sich sehr große Abmessungen für den Trockenteil 1 ergeben, wenn auch bei maximaler Durchflußmenge das gesamte Wärmeträgermedium durch den Wärmetauscher 1a geschickt würde. Aus diesem Grunde, d.h. insbesondere zur Reduzierung der Anlagekosten ist parallel zu jedem Wärmetauscher 1a eine Uberströmleitung 13 angeordnet, durch die oberhalb einer bestimmten Umlaufmenge des Wärmeträgermediums ein Teilstrom unter Umgehung des Wärmetauschers 1a direkt dem Naßteil 2 zugeführt wird. Unabhängig von der Gesamtmenge des durch die Pumpe 4 umgewälzten Wärmeträgermediums werden die Wärmetauscher la somit mit einer etwa konstanten Durchflußmenge beaufschlagt. In Abhängigkeit von der gesamten Umlaufmenge können bei der in Fig. 1 dargestellten Kühlanlage entweder ein oder beide Kühltürme 3 in Betrieb genommen werden.

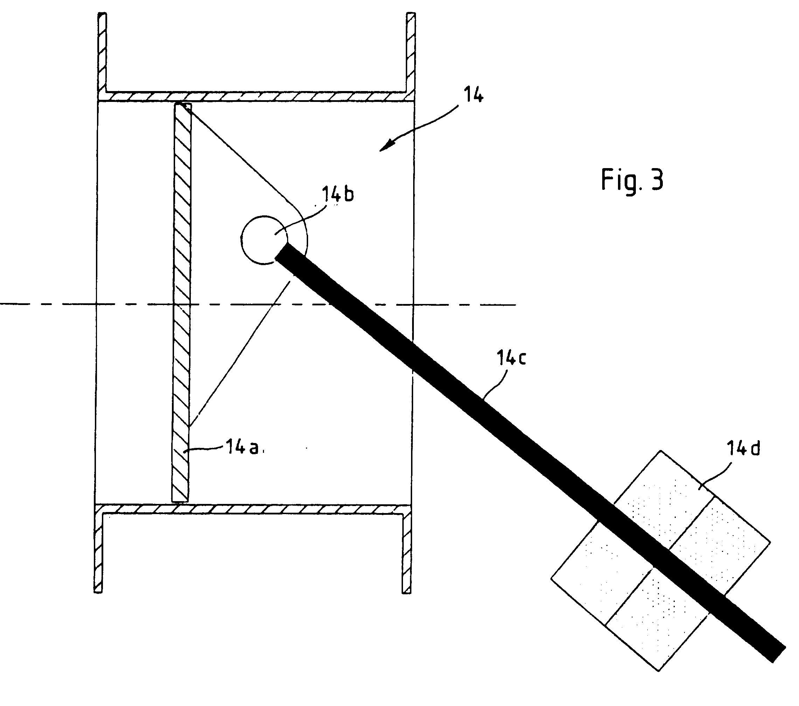

Um die jeden Wärmetauscher la durchströmende Menge des Wärmeträgermediums unabhängig von der durch die Pumpe 4 umgewälzten Gesamtmenge etwa konstant zu halten und auf diese Weise trotz der Auslegung des Trockenteils 1 auf nur einen Teil der maximalen Durchflußmenge des Wärmeträgermediums einen mit steigender Gesamtmenge ansteigenden Druckverlust zu vermeiden, ist in jeder Uberströmleitung 13 ein Klappenventil 14 angeordnet, das anhand eines Ausführungsbeispiels in Fig. 3 dargestellt ist.

Bei diesem Ausführungsbeispiel handelt es sich um ein Klappenventil 14 mit einer Klappe 14a, die exzentrisch durch eine Schwenkachse 14b gelagert und über einen Hebel 14c durch ein Gewicht 14d belastet ist. Durch Wahl des Gewichtes 14d, der wirksamen Hebelarmlänge des Hebels 14c und die Ausbildung und Zuordnung der Klappe 14a sowie der Schwenkachse 14b läßt sich der Vordruck bestimmen, bei dessen Uberschreiten die Klappe 14a selbsttätig öffnet. Der den Öffnungsvorgang auslösende Vordruck wird hierbei derart gewählt, daß er etwa dem dynamischen Druckverlust des zugehörigen Wärmetauschers la entspricht. Das Klappenventil 14 ist weiterhin derart ausgeführt, daß der Vordruck auch bei geöffneter Klappe 14a unabhängig von der Durch-strömmenge nahezu konstant gehalten wird.

Durch das in der Überströmleitung 13 jedes Wärmetauschers 1a angeordnete Klappenventil 14 wird selbsttätig sichergestellt, daß bei Überschreiten eines vorher einstellbaren Vordruckes infolge zunehmender Umlaufmenge des Wärmeträgermediums die Uberströmleitung 13 geöffnet wird, so daß der Wärmetauscher la unabhängig von der gesamten Umlaufmenge stets mit etwa derselben Durchflußmenge beaufschlagt wird und die überschüssige Menge unter Umgehung des Trockenteils 1 direkt dem Naßteil 2 zugeführt wird. Hierdurch wird nicht nur ein unerwünschter Anstieg der dynamischen Druckverluste im Wärmetauscher la bei Überschreiten einer vorgegebenen Gesamtumlaufmenge des Wärmeträgermediums vermieden; es entfällt gleichzeitig eine Beschränkung der maximalen Durchflußmenge durch die Kühlanlage, obwohl deren Trockenteil 1 nur für den Durchfluß einer Teilmenge ausgelegt ist.

Da die Austrittsleitung 7 des Trockenteils 1 unterhalb des Flüssigkeitsstandes im offenen Verteiler 8 mündet, ergibt sich ein sogenannter kraftschlüssiger Betrieb der Kühlanlage, bei dem die geödätische Förderhöhe der Wärmetauscher la zurückgewonnen wird. Beim Befüllen der Kühlanlage muß die geodätische Förderhöhe der Wärmetauscher 1a jedoch zusätzlich zum dynamischen Druckverlust der Wärmetauscher la von der Pumpe 4 aufgebracht werden. Um eine Zwangssteuerung der Klappenventile 14 für den Anfahrvorgang auch dann zu vermeiden, wenn der dynamische Druckverlust in derselben Größenordnung oder geringer als die geodätische Förderhöhe der Wärmetauscher 1a ist, sind die Klappenventile 14 etwa in derselben geodätischen Höhe wie der höchste Punkt des jeweils zugehörigen Wärmetauschers 1a angeordnet.

Um bei einem aus mehreren parallel geschalteten Wärmetauschern la bestehenden Trockenteil 1 ein Zu- und Abschalten von Wärmetauschern 1 zu ermöglichen, ist am höchsten Punkt der durch Zusammenführung der Uberströmleitung 13 und der Austrittsleitung 7 jedes Wärmetauschers la gebildeten Rücklaufleitung ein Belüftungsventil 15 angeordnet. Dieses vorzugsweise durch einen Motor 15a zu öffnende Belüftungsventil 15 ermöglicht ein kurzzeitiges Belüften des Leitungssystems und damit eine Aufhebung des Kraftschlusses der bei einem Teilbetrieb in Betrieb befindlichen Wärmetauscher 1a. Auf diese Weise können weitere Wärmetauscher la befüllt und in Betrieb genommen werden, ohne daß die Regelung des Durchflusses durch die in Betrieb befindlichen Wärmetauscher 1a durch die zugehörigen Klappenventile 14 gestört wird.

### Bezugszeichenliste:

- 1: Trockenteil
- 1a: Wärmetauscher
- 2: Naßteil
- 3: Kühlturm
- 3a: Ventilator
- 4: Pumpe
- 5: Wärmeübertrager
- 6: Steigleitung
- 7: Austrittsleitung
- 8: Verteiler
- 8a: Verteilleitung
- 8b: Sprühdüse
- 9: Rieseleinbau
- 10: Sammeltasse
- 11: Abflußleitung
- 12: Sammelleitung
- 13: Überströmleitung
- 14: Klappenventil
- 14a: Klappe
- 14b: Schwenkachse
- 14c: Hebel
- 14d: Gewicht
- 15: Belüftungsventil
- 15a: Motor

- L₁: Kühlluft
- L₂: Kühlluft

## Patentansprüche

1. Luftgekühlte Kühlanlage mit einem mindestens aus einem Wärmetauscher (1a) bestehenden Trockenteil (1) und einem Naßteil (2), dem das den Trockenteil (1) verlassende Wärmeträgermedium kraftschlüssig zugeführt wird, wobei parallel zum Wärmetauscher (1a) eine Überströmleitung (13) angeordnet ist, die bei höheren Durchflußmengen einen Teil des Wärmeträgermediums unter Umgehung des Wärmetauschers (1a) direkt dem Naßteil (2) zuführt,
**dadurch gekennzeichnet,**
daß in der Überströmleitung (13) ein Klappenventil (14) angeordnet ist, dessen Klappe (14a) bei Überschreiten eines dem dynamischen Druckverlust des zugehörigen Wärmetauschers (1a) bei Erreichen seines Auslegungsdurchsatzes entsprechenden Vordruckes selbsttätig unter Aufrechterhaltung des Vordruckes öffnet, wobei der Auslegungsdurchsatz des Wärmetauschers (1a) einer Teilmenge des maximalen Wärmeträgerdurchsatzes der Kühlanlage entspricht.

2. Vorrichtung nach Anspruch 1, dadurch gekennzeichnet, daß das Klappenventil (14) etwa in derselben geodätischen Höhe wie der höchste Punkt des Wärmetauschers (1a) angeordnet ist.

3. Vorrichtung nach Anspruch 1 oder 2 mit mehreren parallel geschalteten Wärmetauschern, dadurch gekennzeichnet, daß am höchsten Punkt der durch Zusammenführung der Überströmleitung (13) und der Austrittsleitung (7) jedes Wärmetauschers (1a) gebildeten Rücklaufleitung ein Belüftungsventil (15) angeordnet ist.

4. Vorrichtung nach mindestens einem der Ansprüche 1 bis 3, dadurch gekennzeichnet, daß die Klappe (14a) des Klappenventils (14) als gewichtsbelastete Klappe ausgebildet ist.

## Claims

1. Air-cooled cooling plant with a dry part (1) consisting of at least one heat exchanger (1a) and with a wet part (2), to which the heat transfer medium leaving the dry part (1) is supplied gravitationally, there being arranged parallel to the heat exchanger (1a) an overflow conduit (13) which, in the case of relatively high throughflow quantities, supplies part of the heat transfer medium to the wet part (2) directly, bypassing the heat exchanger (1a), characterized in that the overflow conduit (13) has arranged in it a flap valve (14), the flap (14a) of which opens automatically when an admission pressure corresponding to the dynamic pressure loss of the associated heat exchanger (1a) when the rated throughput of the latter is reached is exceeded, the said flap thereby maintaining the admission pressure, the rated throughput of the heat exchanger (1a) corresponding to a part quantity of the maximum heat transfer medium throughput of the cooling plant.

2. Apparatus according to Claim 1, characterized in that the flap valve (14) is arranged approximately at the same geodetic height as the highest point of the heat exchanger (1a).

3. Apparatus according to Claim 1 or 2, with a plurality of parallel-connected heat exchangers, characterized in that a ventilating valve (15) is arranged at the highest point of the return conduit formed by combining the overflow conduit (13) and the outlet conduit (7) of each heat exchanger (1a).

4. Apparatus according to at least one of Claims 1 to 3, characterized in that the flap (14a) of the flap valve (14) is designed as a weighted flap.

## Revendications

1. Installation de réfrigération refroidie par air, comportant une partie sèche (1) constituée d'au moins un échangeur de chaleur (1a), et une partie humide (2) à laquelle le fluide caloporteur sortant de la partie sèche (1) est amené par gravité, une conduite de décharge (13) étant disposée parallèlement à l'échangeur de chaleur (1a) qui, dans le cas de débits plus importants, amène une partie du fluide caloporteur directement vers la partie humide (2) en contournant l'échangeur de chaleur (1a),
caractérisée en ce que
une soupape à clapet (14) est disposée dans la conduite de décharge (13), dont le clapet (14a) s'ouvre automatiquement lors du dépassement d'une pression d'admission correspondant à la perte de charge dynamique de l'échangeur de chaleur (1a) associé lorsque ce dernier atteint son débit de calcul, et qui maintient la pression d'admission, le débit de calcul de l'échangeur de chaleur (1a) correspondant à une quantité partielle du débit maximal du fluide caloporteur de l'installation de réfrigération.

2. Dispositif selon la revendication 1, caractérisé en ce que la soupape à clapet (14) est disposée approximativement à la même hauteur géodésique que le point le plus élevé de l'échangeur de chaleur (1a).

3. Dispositif selon la revendication 1 ou 2, comportant plusieurs échangeurs de chaleur branchés en parallèle, caractérisé en ce qu'une vanne d'aération (15) est disposée au niveau du point le plus élevé de la conduite de retour formée par la jonction de la conduite de décharge (13) et de la conduite de sortie (7) de chaque échangeur de chaleur (1a).

4. Dispositif selon l'une au moins des revendications 1 à 3, caractérisé en ce que le clapet (14a) de la soupape à clapet (14) est réalisé sous la forme d'un clapet à contrepoids.
